(19) Europäisches Patentamt
European Patent Office
Office européen des brevets

(11) Veröffentlichungsnummer: **0 362 138 B1**

(12) **EUROPÄISCHE PATENTSCHRIFT**

(45) Veröffentlichungstag der Patentschrift: **19.07.95**

(51) Int. Cl.[6]: **C08G 59/68**, C08G 59/06

(21) Anmeldenummer: **89810713.1**

(22) Anmeldetag: **20.09.89**

# (54) Epoxidharzgemische.

(30) Priorität: **29.09.88 CH 3622/88**

(43) Veröffentlichungstag der Anmeldung:
**04.04.90 Patentblatt 90/14**

(45) Bekanntmachung des Hinweises auf die Patenterteilung:
**19.07.95 Patentblatt 95/29**

(84) Benannte Vertragsstaaten:
**BE CH DE ES FR GB IT LI NL**

(56) Entgegenhaltungen:
**FR-A- 2 372 271**

**DATABASE WPIL, Nr. 83-773212 Derwent Publications Ltd, London, GB & JP-A-58138729 (Hitachi Chemical K. K.)**

**CHEMICAL ABSTRACTS, vol. 84, no. 8, 23 Februar 1976 Columbus, Ohio, USA ref.no. 84:46184A**

(73) Patentinhaber: **CIBA-GEIGY AG**
**Klybeckstrasse 141**
**CH-4002 Basel (CH)**

(72) Erfinder: **Hofer, Arnold, Dr.**
**Langmattstrasse 5**
**CH-4132 Muttenz (CH)**
Erfinder: **Gempeler, Hans, Dr.**
**Blumenrain 10**
**CH-4147 Aesch (CH)**

**EP 0 362 138 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Epoxidharzzusammensetzungen, welche in Gegenwart von Morpholiniumsalzen vorverlängert werden können, sowie die Verwendung dieser Salze als Vorverlängerungskatalysatoren für Epoxidharze.

Unter Vorverlängerung von Epoxidharzen wird allgemein eine Kettenverlängerung und damit verbunden eine Molekulargewichtserhöhung von Epoxidharzen verstanden. Dabei spielt vor allem die Selektivität des verwendeten Katalysators eine Rolle, welche die Erzeugung linearer Polyhydroxyether sicherstellen soll.

Gleichzeitig mit der Selektivität sollen Vorverlängerungskatalysatoren genügend reaktionsfähig sein, um die Bildung linearer fester vorverlängerter höhermolekularer Epoxidharze mit wirtschaftlich günstiger Geschwindigkeit zu ermöglichen. Hohe Reaktionsgeschwindigkeiten sind dabei wegen der Oeffnung des Epoxidrings von starker Wärmeentwicklung begleitet, und die freigesetzte Wärme kann zur Aufheizung des Reaktionsgemisches verwendet werden.

Viele Verbindungen wurden als Katalysatoren für die Vorverlängerung flüssiger Epoxidharze vorgeschlagen oder beschrieben. Zum Teil sind diese jedoch nicht selektiv und verursachen die obenerwähnte Verzweigung oder Vernetzung. Andere wiederum sind unwirksam in Förderung der stark exothermen Vorverlängerungsreaktionen zur Erzeugung eines befriedigend vorverlängerten linearen festen Epoxidharzes mit praktisch brauchbarer Geschwindigkeit.

Als Vorverlängerungskatalysatoren (advancement catalysts) sind z.B. Tetraalkylammoniumhydroxide oder -halogenide bekannt (s. US 4,465,722). Ausserdem wurde im US 3,275,708 N-Methyl-morpholin als Vorverlängerungskatalysator vorgeschlagen.

Die nach bekannten Verfahren hergestellten vorverlängerten Epoxidharze genügen allerdings nicht in allen Punkten den hohen Anforderungen, welche heute an solche Produkte gestellt werden. So war es Aufgabe der vorliegenden Erfindung, vorverlängerte Epoxidharze bereitzustellen, welche sich insbesondere durch niedrigere Viskosität auszeichnen. Ausserdem wurde hohe Temperaturbeständigkeit und hohe Linearität angestrebt. Eine unerwünschte Erscheinung ist die Spaltung chemischer Verbindungen im Reaktionsgemisch, wodurch nicht nur die Einheitlichkeit des gewünschten Produktes leidet, sondern auch schlechtere Farbeigenschaften des vorverlängerten Produkts in Kauf genommen werden müssen.

Die vorliegende Erfindung betrifft Epoxidharzzusammensetzungen, enthaltend ein bei Raumtemperatur flüssiges Epoxidharz mit durchschnittlich mehr als einer Epoxidgruppe pro Molekül, eine Verbindung mit zwei phenolischen Hydroxylgruppen und mindestens ein quaternäres Morpholiniumbromid oder -iodid.

Als Epoxidverbindungen kommen vor allem solche in Frage, deren Molekulargewicht relativ niedrig ist, z.B. kleiner als 3 500, insbesondere kleiner als 2 000, bevorzugt zwischen 175 und 350. Bei den vorzugsweise verwendeten Diglycidylverbindungen kann es sich um Ether oder Ester handeln; ferner können die Glycidylgruppen auch an Stickstoffatome geknüpft sein. Als Phenole, welche den Ethern zugrunde liegen, sind beispielsweise die folgenden zu nennen: einkernige Diphenole (wie Resorcin), Naphthaline mit zwei Hydroxylgruppen, wie 1,4-Dihydroxy-naphthalin, Biphenyle und andere zweikernige aromatische Verbindungen, die eine Methylen-, Isopropyliden-, O-, $SO_2$-, oder S-Brücke aufweisen und zwei Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A. Als Basis für die Glycidylester dienen beispielsweise die Phthalsäure, Terephthalsäure, Tetrahydrophthalsäure, Hexahydrophthalsäure, Adipinsäure, Trimethyladipinsäure oder Sebazinsäure. Ferner kommen einkernige Hydantoine mit Glycidylgruppen an den Stickstoffatomen, wie N,N'-Diglycidyl-hydantoine, in Frage. Andere Glycidylverbindungen von Stickstoff enthaltenden Ringen sind solche von 5,6-Dihydrourazilen oder Barbitursäuren.

Dabei handelt es sich um bekannte und mehrheitlich käufliche Produkte.

Erfindungsgemäss werden z.B. Morpholiniumsalze eingesetzt, welche der Formel I entsprechen

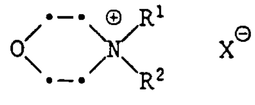 (I),

worin $R^1$ $C_1$-$C_8$-Alkyl und $R^2$ $C_1$-$C_8$-Alkyl, $C_2$-$C_8$-Hydroxyalkyl, $C_4$-$C_8$-Alkoxy-hydroxyalkyl, $C_2$-$C_8$-Alkenyl, $C_3$-$C_8$-Alkoxycarbonylalkyl, $C_3$-$C_8$-Alkylcarbonylalkyl, $C_7$-$C_9$-Phenylalkyl, $C_7$-$C_9$-Phenylhydroxyalkyl oder Phenylcarbonylmethyl bedeutet, und X Brom oder Iod ist.

Als Morpholiniumsalze eignen sich vorzugsweise solche der Formel (I), worin $R^1$ $C_1$-$C_8$-Alkyl und $R^2$ $C_1$-$C_8$-Alkyl, $C_2$-$C_8$-Hydroxyalkyl oder Benzyl bedeutet und X Brom oder Iod ist.

Als $C_1$-$C_8$-Alkyl-Reste, bevorzugt $C_1$-$C_4$-Alkyl-Reste kommen Methyl, Ethyl, n-Propyl, n-Butyl, n-Hexyl oder n-Octyl in Frage. Diese Reste können insbesondere in 2-Stellung (falls vorhanden) eine Hydroxygruppe tragen. Insbesondere bedeutet $R^1$ Methyl oder Ethyl und $R^2$ Ethyl.

Mit $C_4$-$C_8$-Alkoxy-hydroxyalkyl werden Reste bezeichnet, die sowohl eine Etherfunktion, als auch eine Hydroxygruppe enthalten, z.B. (2-Hydroxy-3-butoxy)-propyl.

Bedeutet $R^2$ Alkenyl, so kann es beispielsweise Allyl oder Methallyl sein.

Weitere Beispiele für $R^2$ sind Acetonyl, Ethoxycarbonylmethyl, (2-Hydroxy-2-phenyl)-ethyl oder Phenylcarbonylmethyl.

X bedeutet Brom oder Iod und vor allem Iod.

Die Verbindungen der Formel I sind bekannt und können auf bekannte Weise hergestellt werden, z.B. durch Umsetzung eines Morpholins der Formel II

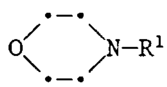

(II)

mit einer Verbindung der Formel III $R^2$-X. In diesem Zusammenhang wird auf die Beispiele verwiesen.

Das erfindungsgemäss zu verwendende Morpholiniumsalz wird in katalytisch wirksamen Mengen eingesetzt, z.B. in einer Menge von etwa 10 bis 6000, vorzugsweise 50-4000 und insbesondere 100-3000 ppm, bezogen auf das Gewicht des Basisharzes.

Das Vorverlängerungsverfahren wird bekanntermassen durchgeführt durch Umsetzung des Epoxidharzes mit Verbindungen, welche zwei phenolische Hydroxylgruppen enthalten.

Dabei können alle in der Methodik der Vorverlängerung bekannten aromatischen Verbindungen mit vorzugsweise zwei phenolischen Hydroxylgruppen verwendet werden. Beispielsweise seien genannt: einkernige Diphenole (wie Resorcin), Naphthaline mit zwei Hydroxylgruppen, wie 1,4-Dihydroxynaphthalin, Biphenyle und andere zweikernige aromatische Verbindungen, die eine Methylen-, Isopropyliden-, O-, $SO_2$-, oder S-Brücke aufweisen und zwei Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A.

Die Menge des Phenols hängt davon ab, was für ein Produkt gewünscht wird. Je grösser sie ist, desto höher wird das Molekulargewicht des Endproduktes im allgemeinen sein. Dabei wird auch der Schmelzpunkt ansteigen und werden sich die physikalischen und chemischen Eigenschaften des gewonnenen Harzes ändern.

Die Vorverlängerungsverfahren und ihre Durchführung sind bekannt und beispielsweise in den US 3,275,708 und 4,465,722 beschrieben.

Dabei erfolgt die Umsetzung beispielsweise bei einer Temperatur von 100-220 °C, bevorzugt 120-190 °C und einem Druck von 10-1000 mbar, bevorzugt 200-800 mbar.

Die auf diese Weise erhaltenen vorverlängerten Epoxidharze zeichnen sich durch hohe Stabilität der Epoxidzahl und der Viskosität nach thermischer Belastung aus. Ausserdem besitzen diese Harze eine für die Weiterverarbeitung günstige, niedrige Viskosität. Es hat sich gezeigt, dass die erfindungsgemäss einzusetzenden Vorverlängerungskatalysatoren eine konstante Aktivität in der Reaktion besitzen und durch ihre hohe Selektivität zu ausserordentlich linearen Produkten führen. Auf den Einsatz eines Kettenabbrechers kann ausserdem verzichtet werden. Falls erwünscht ist auch die Verwendung eines monofunktionellen Kettenabbrechers, z.B. eines Phenols, für die optimale Durchführung der Vorverlängerung geeignet. Die Katalysatoren sind in relativ kleinen Mengen wirksam, die Reaktion verläuft rasch und es ist eine nur geringe Neigung zu unerwünschter Phenolspaltung festzustellen. Dies zeigt sich in einem guten Farbverhalten der Produkte.

Die gehärteten Endprodukte (hergestellt durch Vernetzen mit üblichen Härtungsmitteln für Epoxidharze, wie Säureanhydride, Polyamine, mehrwertige Phenole usw.) weisen gute Flexibilität auf.

Die Produkte können für den Oberflächenschutz, zur Herstellung von Giesslingen, insbesondere auf dem Elektrogebiet, von Prepregs und Laminaten verwendet werden.

Besonders erwähnenswert ist ihr Einsatz zur Herstellung von Festharzen als Bindemittel von Pulverlacken, von wasserlöslichen Primern (z.B. für Autokarosserien), für Dosen- und Tubenlacke.

Beispiel 1: N-Butyl-N-methylmorpholinium-bromid

In einem Sulfierkolben (250 ml) mit Rührer, Tropftrichter und Rückflusskühler werden 22,3 ml N-Methylmorpholin (0,2 mol) und 80 ml Methylethylketon (MEK) vorgelegt und 21,4 ml 1-Butylbromid (0,2 mol) während 20 Minuten zugetropft.
Nach anfänglicher Trübung unter Rückflussbedingungen (ca. 80 °C) wird das Reaktionsgemisch dicker und nimmt eine orange-bräunliche Färbung an. Nach sieben Stunden Reaktionszeit wird der Kristallbrei abgenutscht, mit wenig MEK gewaschen und im Vakuum getrocknet. Ausbeute: 23 %; Schmelzpunkt: 205 °C.

Beispiel 2: N-Butyl-N-methylmorpholinium-iodid

In einer Schliffbirne von 1 L werden die folgenden Substanzen vermischt und im Wasserbad eines Rotationsverdampfers zur Reaktion gebracht (Temperatur 60 °C):
22,8 ml 1-Butyliodid (0,2 mol)
80 ml Methylisobutylketon (MIBK)
22,3 ml N-Methylmorpholin (0,2 mol)
Nach sechs Stunden Reaktionszeit wird das Gemisch mit weiteren 40 ml MIBK verdünnt, genutscht, gewaschen und getrocknet. Ausbeute: 28,7 g (50 %); Schmelzpunkt: 141 °C.

Beispiel 3: N-Ethyl-N-methylmorpholinium-iodid

In einer Schliffbirne werden die folgenden Substanzen auf einem Wasserbad von 60 °C zur Reaktion gebracht:
22,5 g N-Methylmorpholin (0,2 mol)
70 g Methylethylketon (MEK)
31,4 g Ethyliodid (0,2 mol)
Nach einer Reaktionszeit von fünf Stunden wird der entstandene Kristallbrei genutscht, mit MEK gewaschen und getrocknet. Die Ausbeute beträgt: 42,2 g (82 %); Schmelzpunkt: 162 °C.

Beispiel 4: N-Ethyl-N-hydroxyethylmorpholinium-iodid

In einer Schliffbirne werden die folgenden Reaktanten auf dem Wasserbad eines Rotationsverdampfers zur Reaktion gebracht:
25,8 ml N-Hydroxymethylmorpholin (0,2 mol)
80 ml Methylethylketon (MEK)
16,2 g Ethyliodid (0,2 mol)
Nach einer Reaktionsdauer von sieben Stunden bei 60 °C - bei stetigem Rotieren der Schliffbirne - wird das Reaktionsgemisch durch Destillation und/oder Strippen im Vakuum eingeengt, bis in der Vorlage keine flüchtigen Anteile mehr kondensieren. Das Material wird in einem Gemisch von Methanol und Butanol (1:1) konfektioniert. Ausbeute: 52,0 g (90 %); Schmelzpunkt: 37 °C.

Beispiel 5: N-Ethyl-N-propylmorpholinium-iodid

Es wird analog Beispiel 3 vorgegangen, indem in einer 1 L-Schliffbirne folgende Substanzen vermischt und bei 60 °C zur Reaktion gebracht werden:
59,1 g N-Ethylmorpholin (0,5 mol)
200 ml Methylisobutylketon (MIBK)
85,0 g 1-Propyliodid (0,5 mol)
Nach einer Reaktionszeit von sechs Stunden wird der durch die Reaktion entstandene Kristallbrei genutscht, mit 40 ml MIBK gewaschen und im Vakuumschrank getrocknet. Ausbeute: 119,5 g (83 %); Zersetzungspunkt: 240 °C.

Beispiel 6: N-Ethoxycarbonylmethyl-N-methylmorpholinium-bromid

In einer Schliffbirne werden analog zu den obigen Beispielen die folgenden Substanzen während 6 Stunden bei 50 °C zur Reaktion gebracht:
23,0 ml Bromessigethylester (0,2 mol)

100 ml Methylethylketon (MEK)
22,5 ml N-Methylmorpholin (0,2 mol)
Im Laufe der Reaktion ist es günstig, das Gemisch noch mit wenig MEK zu verdünnen. Nach dem Waschen mit MEK und dem Trocknen im Vakuumschrank ergibt sich eine Ausbeute von 53,6 g (84 %); Schmelzpunkt: 150°-155°C.

Beispiel 7: N-Allyl-N-methylmorpholinium-bromid

In einer Schliffbirne werden analog zu den obigen Beispielen die folgenden Substanzen während 8 Stunden/60°C reagieren gelassen:
17,2 ml Allylbromid (0,2 mol)
80 ml Methylethylketon (MEK)
22,5 ml N-Methylmorpholin (0,2 mol)
Das Reaktionsgemisch wird durch Destillation und Strippen im Vakuum aufgetrennt. Das Reaktionsprodukct ist eine gelbliche, sehr hoch viskose Flüssigkeit. Ausbeute von 43,3 g (97 %); $n^{D}_{25}$ = 1,549.

Durchführung von Advancementreaktionen

Beispiel 8:

In einem Polymerkolben werden 845 g Bisphenol A-diglycidylether mit einer Epoxyzahl von 5,4 eq/kg unter Rühren bei 40-50°C mit einer Methanollösung von N-Butyl-N-methylmorpholinium-bromid (Beispiel 1) vermischt, sodass die Katalysatorkonzentration bezogen auf das Harz 2000 ppm (8,4 mmol/kg) beträgt. Gleichzeitig wird die Temperatur unter Rühren auf 100°C gesteigert und eine erste Portion von 217 g Bisphenol-A zur Reaktionsmischung zugegeben und aufgelöst. Das Gemisch wird auf 170°C erwärmt und eine zweite Portion von 217 g Bisphenol-A hinzugefügt. Beim Erreichen von 180°C wird die Temperatur bei einem partiellen Vakuum von 500 mbar konstant gehalten, wobei nach 3-4 Stunden die zu erzielende Epoxyzahl von 0,6 eq/kg erreicht ist, wonach die Harzschmelze ausgetragen, abgekühlt und zerkleinert werden kann. Die Viskosität dieses Harzes (40 % in Butylcarbitol, 25°C) beträgt 1970 mPas und 2350 mPas nach einer thermischen Behandlung von 4 h/180°C.

Beispiel 9:

Es wird analog wie in Beispiel 8 vorgegangen, wobei N-Butyl-N-methylmorpholinium-iodid (Beispiel 2) als Katalysator eingesetzt wird. Die Konzentration des Katalysators bezogen auf das Basisharz beträgt 3300 ppm (11,6 mmol/kg). Die entsprechende Viskosität beträgt 1570 mPas bzw. 2120 mPas nach thermischer Behandlung.

Beispiel 10:

Es wird analog wie in Beispiel 8 vorgegangen, wobei als Katalysator N-Ethyl-N-methylmorpholinium-iodid in Methanollösung eingesetzt wird. Die Konzentration des Katalysators beträgt 2000 ppm (7,8 mmol/kg). Die Viskosität des so erhaltenen Produktes beträgt 1710 mPas bzw. 2000 mPas nach thermischer Behandlung.

Beispiel 11:

Im Polymerkolben werden 845 g Basisharz Bisphenol-A-diglycidylether mit einer Epoxyzahl von 5,4 eq/kg unter Rühren aufgeheizt und bei 100°C mit einer ersten Portion Bisphenol-A vermischt (217 g). Als Katalysator wird N-Ethyl-(2-hydroxy)ethyl-morpholinium-iodid (Beispiel 4) in Butanollösung zugegeben, wobei die Konzentration bezogen auf das Basisharz 4500 ppm (15,7 mmol/kg) beträgt. Gleichzeitig wird die Temperatur unter stetigem Rühren angehoben und bei 170°C die zweite Portion Bisphenol A zugegeben, wonach die Temperatur bei 180°C konstant gehalten wird. Nach ca. 3-4 Stunden hat die Epoxyzahl des Reaktionsgemisches den Wert von 0,60 eq/kg erreicht, wonach die Harzschmelze ausgetragen, abgekühlt und zerkleinert werden kann. Die Viskosität dieses Produktes (gemessen an einer 40%igen Lösung in Butylcarbitol bei 25°C im Hoeppler-Viskosimeter) beträgt 1430 mPas und 2020 mPas nach einer thermischen Behandlung von 4 Stunden bei 180°C.

Beispiel 12:

Es wird analog wie in Beispiel 8 vorgegangen, wobei als Katalysator N-Ethyl-N-propylmorpholinium-iodid (Beispiel 5) in Methanollösung eingesetzt wird, sodass die Konzentration bezogen auf das Basisharz 2500 ppm (8,8 mmol/kg) beträgt. Die Viskosität beträgt 1700 mPas und 2180 mPas nach thermischer Behandlung (4 h/80 ° C).

Beispiel 13:

Es wird analog wie in Beispiel 8 vorgegangen, wobei als Katalysator N-Ethoxycarbonylmethyl-N-methylmorpholinium-bromid (Beispiel 6) in einer Konzentration von 6000 ppm (22,4 mmol/kg) bezogen auf das Basisharz eingesetzt wird. Die Viskosität des Produkts beträgt 1580 mPas und 1900 mPas nach thermischer Behandlung (4 h/180 ° C).

Beispiel 14:

Es wird analog wie in Beispiel 8 vorgegangen, wobei als Katalysator N-Allyl-N-methylmorpholinium-bromid (Beispiel 7) in einer Konzentration von 5000 ppm (22,5 mmol/kg) bezogen auf das Basisharz eingesetzt wird. Die Viskosität des Produkts beträgt 1580 mPas und 2130 mPas nach thermischer Behandlung (4 h/180 ° C).

Beispiel 15:

100 g Bisphenol-A werden in einem 500 ml-Sulfierkolben mit Rührer, Rückflusskühler und Oelbad geschmolzen und mit 1,00 g des betr. Katalysators versetzt. Die Temperatur wird auf 180 ° unter stetigem Rühren angehoben und für 5 Stunden dabei belassen. Nach dem Abkühlen wird das Reaktionsgemisch mittels HPLC untersucht und der Gehalt an Phenol bestimmt:

| Katalysator gemäss Bsp. Nr. | Gehalt an Phenol |
|---|---|
| 1 | 2 % |
| 2 | 2 % |
| 3 | 1 % |
| 4 | 4 % |
| 5 | 3 % |
| 6 | 7 % |
| 7 | 5 % |

**Patentansprüche**

1. Epoxidharzzusammensetzung enthaltend ein bei Raumtemperatur flüssiges Epoxidharz mit durchschnittlich mehr als einer Epoxidgruppe pro Molekül, eine Verbindung mit zwei phenolischen Hydroxylgruppen und mindestens ein quaternäres Morpholiniumbromid oder -iodid als Vorverlängerungskatalysator.

2. Epoxidharzzusammensetzung gemäss Anspruch 1, enthaltend Diglycidylverbindungen mit einem Molekulargewicht unter 3500.

3. Epoxidharzzusammensetzung gemäss Anspruch 1, enthaltend ein Morpholiniumsalz der Formel I

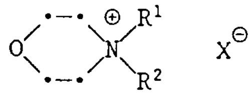 (I),

worin $R^1$ $C_1$-$C_8$-Alkyl und $R^2$ $C_1$-$C_8$-Alkyl, $C_2$-$C_8$-Hydroxyalkyl, $C_4$-$C_8$-Alkoxy-hydroxyalkyl, $C_2$-$C_8$-

Alkenyl, $C_3$-$C_8$-Alkoxycarbonylalkyl, $C_3$-$C_8$-Alkylcarbonylalkyl, $C_7$-$C_9$-Phenylalkyl, $C_7$-$C_9$-Phenylhydroxyalkyl oder Phenylcarbonylmethyl bedeutet, und X Brom oder Iod ist.

4. Epoxidharzzusammensetzung gemäss Anspruch 3, enthaltend ein Morpholiniumsalz der Formel I, worin $R^1$ $C_1$-$C_8$-Alkyl und $R^2$ $C_1$-$C_8$-Alkyl, $C_2$-$C_8$-Hydroxyalkyl oder Benzyl bedeutet und X Brom oder Iod ist.

5. Epoxidharzzusammensetzungen gemäss Anspruch 3, enthaltend ein Morpholiniumsalz der Formel I, worin $R^1$ Methyl oder Ethyl und $R^2$ Ethyl sind.

6. Epoxidharzzusammensetzungen gemäss Anspruch 3, enthaltend ein Morpholiniumsalz der Formel I, worin X Iod ist.

7. Verwendung von quaternären Morpholiniumbromiden oder Iodiden als Vorverlängerungskatalysatoren für Epoxidharze.

8. Verwendung gemäss Anspruch 8 von Morpholiniumsalzen der Formel I gemäss Anspruch 3.

## Claims

1. An epoxy resin composition comprising an epoxy resin which is liquid at room temperature and contains on average more than one epoxy group per molecule, a compound with two phenolic hydroxyl groups, and at least one quaternary morpholinium bromide or morpholinium iodide as advancement catalyst.

2. An epoxy resin composition according to claim 1, comprising diglycidyl compounds having a molecular weight below 3500.

3. An epoxy resin composition according to claim 1, comprising a morpholinium salt of formula I

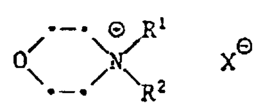 (I),

wherein $R^1$ is $C_1$-$C_8$alkyl and $R^2$ is $C_1$-$C_8$alkyl, $C_2$-$C_8$hydroxyalkyl, $C_4$-$C_8$alkoxy-hydroxyalkyl, $C_2$-$C_8$alkenyl, $C_3$-$C_8$alkoxycarbonylalkyl, $C_3$-$C_8$alkylcarbonylalkyl, $C_7$-$C_9$phenylalkyl, $C_7$-$C_9$phenylhydroxyalkyl or phenylcarbonylmethyl, and X is bromine or iodine.

4. An epoxy resin composition according to claim 3, comprising a morpholinium salt of formula I wherein $R^1$ is $C_1$-$C_8$alkyl and $R^2$ is $C_1$-$C_8$alkyl, $C_2$-$C_8$hydroxyalkyl or benzyl, and X is bromine or iodine.

5. An epoxy resin composition according to claim 3, comprising a morpholinium salt of formula I wherein $R^1$ is methyl or ethyl and $R^2$ is ethyl.

6. An epoxy resin composition according to claim 3, comprising a morpholinium salt of formula I wherein X is iodine.

7. Use of quaternary morpholinium bromides or iodides as advancement catalysts for epoxy resins.

8. Use according to claim 8 of morpholinium salts of formula I according to claim 3.

## Revendications

1. Composition de résine époxyde contenant une résine époxyde liquide à la température ambiante, ayant en moyenne plus d'un groupe époxyde par molécule, un composé ayant deux groupes hydroxyle phénoliques et au moins un bromure ou iodure de morpholinium quaternaire servant de catalyseur de pré-extension.

2. Composition de résine époxyde selon la revendication 1, qui contient des composés diglycidyliques ayant une masse moléculaire inférieure à 3500.

3. Composition de résine époxyde selon la revendication 1, qui contient un sel de morpholinium de formule I :

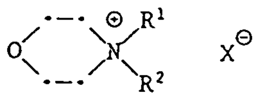

(I),

dans laquelle $R^1$ est un groupe alkyle en $C_1$ à $C_8$ et $R^2$ est un groupe alkyle en $C_1$ à $C_8$, hydroxyalkyle en $C_2$ à $C_8$, (alcoxy en $C_4$ à $C_8$)hydroxyalkyle, alcényle en $C_2$ à $C_8$, alcoxycarbonylalkyle en $C_3$ à $C_8$, alkylcarbonylalkyle en $C_3$ à $C_8$, phénylalkyle en $C_7$ à $C_9$, phénylhydroxyalkyle en $C_7$ à $C_9$ ou phénylcarbonylméthyle, et X est le brome ou l'iode.

4. Composition de résine époxyde selon la revendication 3, qui contient un sel de morpholinium de formule I dans laquelle $R^1$ est un radical alkyle en $C_1$ à $C_8$ et $R^2$ est un radical alkyle en $C_1$ à $C_8$, hydroxyalkyle en $C_2$ à $C_8$ ou benzyle, et X est le brome ou l'iode.

5. Compositions de résine époxyde selon la revendication 3, qui contiennent un sel de morpholinium de formule I dans laquelle $R^1$ est le radical méthyle ou éthyle, et $R^2$ est le radical éthyle.

6. Compositions de résine époxyde selon la revendication 3, qui contiennent un sel de morpholinium de formule I dans laquelle X est l'iode.

7. Utilisation de bromures ou d'iodures de morpholinium quaternaire comme catalyseurs de pré-extension pour résines époxydes.

8. Utilisation selon la revendication 8 de sels de morpholinium de formule I selon la revendication 3.